# EUROPEAN PATENT APPLICATION

(11) **EP 4 422 216 A1**
(43) Date of publication of application: **28.08.2024**
(21) Application number: 22882718.4
(22) Date of filing: 12.10.2022
(51) Int. Cl.: H04W 4/00, H04L 45/00, H04W 28/06

(54) **DATA TRANSMISSION METHOD AND APPARATUS, AND TERMINAL**

(30) Priority: 19.10.2021 CN 202111216443
(71) Applicant: Vivo Mobile Communication Co., Ltd., Dongguan, Guangdong 523863 (CN)
(72) Inventor: CHEN, Li, Dongguan, Guangdong 523863 (CN)
(74) Representative: Lavoix
(86) International application number: PCT/CN2022/124883
(87) International publication number: WO 2023/066108

(57) **Abstract**

This application discloses a data transmission method and apparatus and a terminal, and pertains to the field of communication technologies. The data transmission method includes: in a case that a terminal discards a first data unit, discarding, by the terminal, at least some of data units associated with the first data unit, where the first data unit includes a first data packet and/or a first group, and the data unit includes a data packet and/or a group.

## Description

### CROSS-REFERENCES TO RELATED APPLICATIONS

This application claims priority to Chinese Patent Application No. 202111216443.0, filed in China on October 19, 2021, which is incorporated herein by reference in its entirety.

### TECHNICAL FIELD

This application relates to the field of communication technologies, and specifically, to a data transmission method and apparatus and a terminal.

### BACKGROUND

Extended reality (Extended reality, XR) refers to all combined real and virtual environments and man-machine interactions generated by computer technology and wearable devices. It encompasses representative forms such as augmented reality (Augmented Reality, AR), mixed reality (Mixed Reality, MR), virtual reality (Virtual Reality, VR), and interpolated areas between them. The virtual world has levels from partially sensory inputs to fully immersive virtual reality. One crucial aspect of XR is extension of human experience, especially the experience in association with presence (represented by VR) and cognitive acquisition (represented by AR).

In existing wireless networks, the discarding of different data packets is independent of each other, but data packets are associated with each other. This may possibly cause some ineffective data transmissions, resulting in waste of system resources or increased delay of data.

### SUMMARY

Embodiments of this application provide a data transmission method and apparatus and a terminal, so as to reduce ineffective data transmissions, increase system resource utilization, and reduce data packet transmission delay.

According to a first aspect, an embodiment of this application provides a data transmission method including:
in a case that a terminal discards a first data unit, discarding, by the terminal, at least some of data units associated with the first data unit, where the first data unit includes a first data packet and/or a first group, and the data unit includes a data packet and/or a group.

According to a second aspect, an embodiment of this application provides a data transmission apparatus including:
a discarding module configured to: in a case that a terminal discards a first data unit, discard at least some of data units associated with the first data unit, where the first data unit includes a first data packet and/or a first group, and the data unit includes a data packet and/or a group.

According to a third aspect, a terminal is provided. The terminal includes a processor, a memory, and a program or instructions stored in the memory and capable of running on the processor. When the program or instructions are executed by the processor, the steps of the method according to the first aspect are implemented.

According to a fourth aspect, a terminal is provided, including a processor and a communication interface. The processor is configured to: in a case that the terminal discards a first data unit, discard at least some of data units associated with the first data unit, where the first data unit includes a first data packet and/or a first group, and the data unit includes a data packet and/or a group.

According to a fifth aspect, a readable storage medium is provided. The readable storage medium stores a program or instructions, and the program or instructions are executed by a processor to implement the steps of the method according to the first aspect.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program/program product is provided. The computer program/program product is stored in a non-volatile storage medium and executed by at least one processor to implement the steps of the method according to the first aspect.

According to an eighth aspect, a communication device is provided and configured to implement the steps of the method according to the first aspect.

In the embodiments of this application, at least some of the data units associated with the first data unit are discarded in a case that the terminal discards the first data unit. When a data unit is discarded, data units associated with the data unit cannot be successfully transmitted or demodulated and therefore can be discarded in advance. This can reduce ineffective data transmissions, save system resources, and increase system resource utilization, while ensuring the transmission efficiency of other data packets and reducing the transmission delay of data packets.

### BRIEF DESCRIPTION OF DRAWINGS

FIG. 1 is a schematic diagram of a wireless communications system;
FIG. 2 is a schematic flowchart of a data transmission method according to an embodiment of this application;
FIG. 3 is a schematic structural diagram of a data transmission apparatus according to an embodiment of this application;
FIG. 4 is a schematic structural diagram of a communication device according to an embodiment of this application; and
FIG. 5 is a schematic diagram of composition of a terminal according to an embodiment of this application.

### DESCRIPTION OF EMBODIMENTS

The following clearly describes the technical solutions in the embodiments of this application with reference to the accompanying drawings in the embodiments of this application. It is clear that the described embodiments are only some but not all of the embodiments of this application. All other embodiments obtained by persons of ordinary skill in the art based on the embodiments of this application shall fall within the protection scope of this application.

The terms "first", "second", and the like in this specification and claims of this application are used to distinguish between similar objects rather than to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish objects of a same type, and do not restrict a quantity of objects. For example, there may be one or a plurality of first objects. In addition, "and/or" in the specification and claims represents at least one of connected objects, and the character "/" generally indicates that the associated objects have an "or" relationship.

It should be noted that the technologies described in the embodiments of this application are not limited to long term evolution (Long Term Evolution, LTE)/LTE-Advanced (LTE-Advanced, LTE-A) systems, and may also be used in other wireless communications systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and the NR term is used in most of the following descriptions, but these technologies may also be applied to other applications than an NR system application, for example, the 6th generation (6th Generation, 6G) communications system.

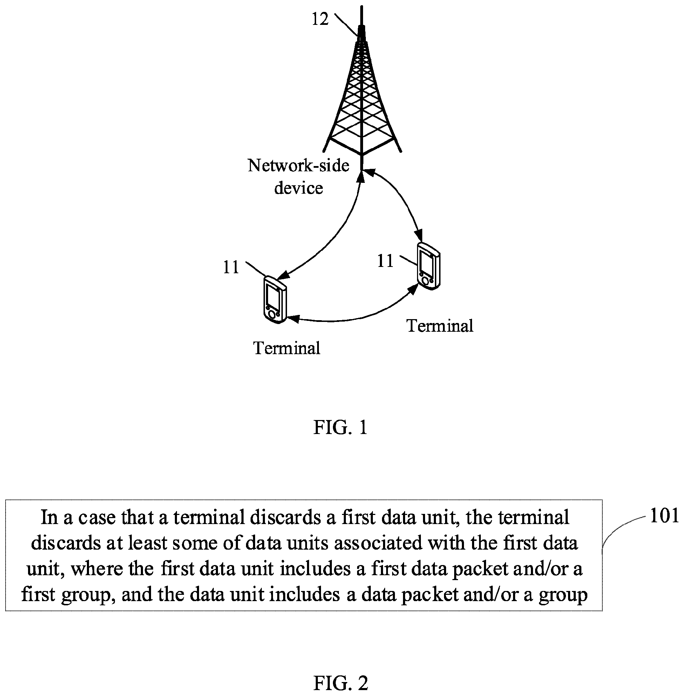

FIG. 1 is a block diagram of a wireless communications system to which embodiments of this application are applicable. The wireless communications system includes a terminal 11 and a network-side device 12. The terminal 11 may also be referred to as a terminal device or user equipment (User Equipment, UE), and the terminal 11 may be a terminal-side device, such as a mobile phone, a tablet computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), a wearable device (Wearable Device) or vehicular user equipment (Vehicle User Equipment, VUE), or pedestrian user equipment (Pedestrian User Equipment, PUE). The wearable device includes a smart watch, a wrist band, earphones, glasses, and the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a wireless local area network (Wireless Local Area Networks, WLAN) access point, a wireless fidelity (Wireless Fidelity, WiFi) node, a transmitting receiving point (Transmitting Receiving Point, TRP), or another appropriate term in the art. Provided that a same technical effect is achieved, the base station is not limited to a specific technical term. It should be noted that in the embodiments of this application, the base station in the NR system is merely used as an example, and a specific type of the base station is not limited. The core network device may be a location management device, for example, a location management function (LMF or E-SLMC).

For a VR service, the uplink is dominated by dense transmission of small data packets. These small data packets may carry information such as gestures and control information, which are used as inputs and references for presenting data in the downlink. The downlink is dominated by transmission of multimedia data such as videos and audios, delivering immersive experience to users through timely reception and presentation of such multimedia data. Downlink video data is used as an example. Data packets arrive periodically or quasi-periodically, with a data rate as high as dozens or even hundreds of Mbit/s. A typical value of frames per second (Frame Per Second, FPS) is 60 or 120, and an interval between adjacent data packets is approximately 1 FPS. Generally, such data needs to be successfully transmitted over the air interface within 10 ms, with a transmission success rate not lower than 99% or even as high as 99.9%.

For an AR service, in addition to the dense transmission of small data packets, multimedia data such as videos and audios may also be transmitted in the uplink, with a service characteristic similar to the downlink. Usually, the data rate is relatively low, for example, dozens of Mbit/s at most, and a time limit for transmission on the air interface may be loosened, for example, generally data needs to be successfully transmitted within 60 ms. Characteristics of downlink data transmission are basically the same as those of the VR service.

Users expect interaction and operation in extended reality. Actions and interactions include motions, gestures, and body reactions. Degree of freedom (Degree of Freedom, DoF) describes the number of independent parameters used to define the movement of a viewport in three-dimensional (3-dimension, 3D) space.

In an XR application scenario, a user in virtual reality can obtain information about a new angle of view through actions such as a head turn. In this case, the head turn action of the XR user can be communicated to a base station by sending an uplink signal. After receiving the uplink signal, the base station schedules the required downlink data for the XR user.

The XR service mainly includes video data, audio data, and some control signaling and special data with control functions. In a wireless network, XR service transmission mainly involves uplink and downlink video/audio data transmission and exchange between a terminal device (User Equipment) and the wireless network through a new network (for example, LTE/NR). In addition to transmission of video and audio data, the UE needs to perform uplink transmission of some control signaling and special data with control functions through the wireless network, so as to control the generation, processing, and downlink wireless transmission of video and audio service data in the XR service transmitted by the network to the UE.

Such control information and special data with control functions include some service control data generated by an XR application encoder of the UE and control data information contained in a service transmission protocol. The following are some examples.

From the application perspective, the control information and special data with control functions may include (but not limited to):
I frames, IDR frames, or non-FOV (Field of view, field of view) frames generated by the video encoder; and
   user behavior data captured by sensors, such as pose/control data; where by receiving such data, the network can determine user behaviors, for example, a head turn action of the user, and then adjust the content of video data to be sent.

From the transmission protocol perspective, the control information and special data with control functions may include:

TCP ACK signaling (TCP feedback) for downlink audio/video service transmission, where the network needs to determine whether to transmit subsequent frames, based on whether a corresponding video/audio frame has been acknowledged by the UE; and
real-time transport control protocol (Real-time Transport Control Protocol, RTCP) acknowledgement (acknowledge, ACK) signaling, used to control the control signaling for real-time data transmission and confirm the real time requirements and time synchronization of service data transmission.

Usually, the network needs to receive such control signaling and special data with control functions from the UE in a timely and reliable manner, so as to obtain the transmission status of the current service and relevant necessary control information. An application server needs to further generate, based on such information, video and audio service data to be transmitted subsequently and pass the data to the wireless network for processing and transmission. Finally, the service data is transmitted downlink to the UE.

According to discussions of the XR standardization project, the XR service is a quasi-periodic service. In other words, service packets arrive at equal intervals and the interval is represented by a small floating-point number (a non-positive integer) (for example, 30 FPS (FPS stands for frames per second)→33.33 ms, 60 FPS→16.67 ms, or 120 FPS→8.33 ms). In addition, the XR service has a high requirement for delay, and the packet delay budge (Packet Delay Budget, PDB) of the air interface is required to be around 10 ms.

However, due to reasons such as the delay for transmission of a service from the server side to the base station side, there is a jitter in the arrival time of XR service packets at the base station side. In other words, on a quasi-periodic basis, the arrival time of service packets deviates within a certain range. This deviation is referred to as a jitter (jitter). The jitter complies with the truncated Gaussian distribution, within a deviation of ±4 ms around the time position at which a quasi-periodic service packet arrives.

For example, a packet arrives at the base station side within a time of n (for example, in unit of ms) on a quasi-periodic basis. Due to existence of a jitter, the packet actually arrives in a time of n+j, where j stands for the jitter, for example, a jitter of -1 ms. This means that a packet supposed to arrive within a time of n actually arrives in n-1 ms.

To help the network side perform uplink scheduling based on uplink data to be transmitted, a buffer status report (Buffer Status Report, BSR) mechanism is introduced since LTE, in which the UE reports to the base station an amount of to-be-transmitted uplink data corresponding to each logical channel group. Basically, this mechanism is still adopted in NR.

ABSR is reported at a granularity of logical channel group (Logical Channel Group, LCG), and each established logical channel may be configured to belong to one logical channel group. In NR, a maximum of eight logical channel groups can be configured for a single UE.

The BSR is triggered by the following events.
(1) New to-be-transmitted uplink data reaches a logical channel in a logical channel group, and this logical channel has a priority higher than that of a previous logical channel with to-be-transmitted uplink data, or no to-be-transmitted uplink data is available on any logical channels prior to arrival of that new data. In this case, a Regular BSR is triggered.
(2) When a new transport block (Transport Block, TB) is being constructed, the number of Padding bits in the new TB is greater than or equal to the number of bits occupied by (a single BSR MAC CE + corresponding Subheader) (that is, the Padding bits in the new TB can further accommodate the bits corresponding to a single BSR MAC CE). In this case, a Padding BSR is triggered.
(3) A retxBSR-Timer timer expires and at least one logical channel has to-be-transmitted uplink data. In this case, a Regular BSR is triggered.
(4) When a periodicBSR-Timer timer expires, a Periodic BSR is triggered.

In a case that the Regular BSR is triggered and no uplink resource for new transmission is available, the UE triggers a scheduling request (Scheduling Request, SR) to request a new uplink transmission resource through physical uplink control channel (PUCCH) transmission or random access.

In a case that the Periodic BSR is triggered, the UE adds one BSR MAC CE into a constructed uplink TB only when a new uplink transmission resource is available, but does not trigger an SR to actively request the network for a new uplink transmission resource.

In a case that the Padding BSR is triggered, the UE directly adds one BSR MAC CE into the new uplink TB.

This embodiment relates to uplink data processing and transmission procedure of the wireless communication AS (Access Stratum, access stratum) of the UE. The following describes the major protocol layers and relevant functions involved in the prior art.

### (1) Packet data convergence protocol (PDCP) layer and radio bearer (radio bearer)

Service data generated by the application layer (APP) of the UE is categorized into different service data flows based on their quality of service (Quality-of-service, QoS) requirements, and these service data flows correspond to the same or similar QoS requirements. In an NR system, the service data flow corresponds to one QoS flow, while in an LTE system, the service data flow corresponds to one EPS (Evolved Packet System, evolved packet system) bearer.

The service data is passed to the AS layer in the form of data packets (Packet), and further mapped by the AS layer to one radio bearer (Radio Bearer) based on the corresponding QoS flow (NR) or EPS bearer (LTE). One radio bearer includes one PDCP entity (PDCP protocol layer processing entity), one RLC entity (PDCP protocol layer processing entity), and corresponding logical channels (at the MAC protocol layer).

After a data packet passed to the AS layer is mapped to a radio bearer, it will be passed to a corresponding PDCP entity in the form of a PDCP SDU (Service Data Unit, service data unit) for processing. For each PDCP SDU arrived, the PDCP entity generates a PDCP PDU (Protocol Data Unit, protocol data unit), and sets a PDCP sequence number (sequence number, SN) for indicating the transmission sequence of PDCP SDUs and their corresponding PDCP PDUs in the PDCP entity. Values of PDCP SNs are set according to the sequence of PDCP SDUs passed to the PDCP entity. A PDCP SDU arrived earlier is transmitted prior to a PDCP SDU arrived later. Specifically, the PDCP entity maintains TX _NEXT, an internal variable representing the total number of PDCP PDUs transmitted by the PDCP entity and used for setting the value of PDCP SN. This variable is initialized as 0 upon establishment of the PDCP entity. Each time a PDCP SDU is passed from an upper layer (Upper layers) to a corresponding PDCP entity, the PDCP entity sets the SN of the PDCP PDU corresponding to the PDCP SDU to TX_NEXT and increases TX_NEXT by 1. Then, the PDCP entity adds a header file for each PDCP SDU and generates a PDCP PDU containing an SN value for the PDCP PDU. Usually, the PDCP entity passes the PDCP PDUs based on the SNs contained in the PDCP PDUs to a lower protocol layer (RLC) for subsequent processing and transmission. An SN is an ordinal number indicating the transmission sequence of each PDCP SDU. Generally, a PDCP SDU reaching the PDCP entity earlier has a smaller SN value and will be transmitted earlier.

### (2) Radio link control (Radio Link Control, RLC) layer

A PDCP PDU passed from a PDCP entity to a corresponding RLC entity is stored in a buffer of the UE as a to-be-transmitted RLC SDU, and will be further processed by the RLC entity. Specifically, when a logical channel corresponding to an RLC entity is allocated with a certain amount of transmission resources, the RLC entity determines the RLC SDUs that can be multiplexed into the allocated transmission resources for transmission, based on the amount of data that can be carried by the allocated transmission resources and the data amount of the to-be-transmitted RLC SDUs in the buffer.

For one or more RLC SDUs that can be entirely multiplexed into the allocated transmission resources as determined by the RLC entity, the RLC entity adds RLC header files and generates RLC PDUs for these RLC SDUs, and then passes the RLC PDUs to a lower protocol layer (MAC) for subsequent processing and transmission. After the foregoing multiplexing for entire RLC PDUs, if some resources are still available but not enough for multiplexing an entire RLC SDU (that is, the data amount supported by the resources is less than the data amount required for multiplexing a next RLC SDU), the RLC entity will perform segmentation. To be specific, the RLC entity adds a header file for some data of the next RLC SDU to be transmitted, generates an RLC PDU, and passes the RLC PDU to a lower protocol layer for subsequent processing and transmission.

The remaining part of that segmented RLC SDU is still stored in the buffer of the UE and will be transmitted upon the arrival of next uplink transmission resources.

### (3) Media access control (MAC) layer and logical channel

An RLC entity corresponding to each radio bearer further corresponds to one logical channel (logical channel) at the MAC layer. When a UE is assigned a grant for uplink transmission resources (Uplink grant), a MAC entity of the UE further allocates the resources for the current uplink transmission to multiple logical channels. Specifically, each logical channel corresponds to one logical channel priority. The MAC entity of the UE allocates to logical channels the transmission resources available for current uplink transmission in descending order of logical channel priority based on a LCP (Logical channel prioritization, logical channel prioritization) resource allocation mechanism. The transmission resources correspond to the amount of data that can be transmitted by each logical channel.

As described above, based on the transmission resources allocated to each logical channel, the corresponding RLC entity passes one or more RLC PDUs to the corresponding logical channel at the MAC layer. The MAC layer treats these RLC PDUs obtained by each logical channel from the RLC entity as the MAC SDUs to be transmitted, adds a MAC header file corresponding to a logical channel to form a MAC subPDU of the logical channel, and multiplexes the MAC subPDU into the entire transmission resources as the data to be transmitted by this logical channel in the current uplink transmission. The MAC subPDUs of multiple logical channels are combined to finally form one MAC PDU which is used as a data packet for the current uplink transmission and transmitted to the network through a radio signal.

It should be noted that the RLC entity will segment an RLC SDU (as described above). Therefore, for the uplink transmission resources obtained by a UE, the UE needs to multiplex the remaining part of the RLC SDU, which has been segmented in a previous transmission and not been transmitted yet, into the resources for transmission before it can transmit subsequent data packets corresponding to other RLC SDUs.

In general, in existing LTE and NR networks, the UE usually implements the foregoing uplink data processing and transmission procedure for data of each radio bearer based on a principle of "arrived first, transmitted first". Specifically, regarding each radio bearer, the UE processes data packets at each of the foregoing protocol layers in the order in which the data packets (SDU) reach corresponding entities at this layer, and sequentially passes the processed data packets (PDU) to the next protocol layer. In other words, for a data packet reaching the AS layer earlier, the corresponding PDCP entity will set a smaller PDCP SN value for the data packet, so that the data packet will be processed by each of the foregoing protocol layers earlier and multiplexed into the uplink resources for transmission earlier. On the contrary, a data packet arrived later will be assigned a larger PDCP SN value, and will usually be processed, multiplexed, and transmitted by each of the foregoing protocol layers subsequent to the data packet arrived earlier. This also means that for the data packets mapped to radio bearers, the UE ultimately implements a sequential transmission mechanism in the order in which the data packets arrive at the AS.

This principle is adopted based mainly on the consideration of transmission delay. In existing wireless networks, data transmission delay requirements of radio bearers are basically the same, but the AS layer of the UE is not allowed to obtain the specific content of each data packet, and therefore cannot perform differentiated processing for each data packet. Therefore, performing uplink processing, scheduling, and transmission of data packets according to the arrival order of the data packets is a relatively reasonable approach in the prior art, from the perspective of meeting the delay requirement.

Regarding a discard timer of the PDCP layer, only a data radio bearer (Data Radio Bearer, DRB) has a discard timer. The transmit end starts a new timer for each SDU from an upper layer and discards the SDU upon expiration of the timer, so as to prevent congestion of the transmit buffer. The specific duration of this timer is configured by the upper layer RRC. Specifically, when a PDCP SDU is received from the upper layer, a PDCP entity on the transmit end starts a discard timer associated with this PDCP SDU. When the discard timer associated with this PDCP SDU expires or this PDCP SDU is successfully transmitted (that is, acknowledged by a PDCP status report as successfully transmitted), the PDCP entity on the transmit end needs to discard this PDCP SDU and the corresponding PDCP data PDU. If this PDCP data PDU has been passed to a lower layer, the lower layer needs to be instructed to discard it. For a signaling radio bearer (SRB), when the upper layer requests to discard a PDCP SDU, the PDCP entity needs to discard all stored PDCP SDUs and PDCP PDUs. Certainly, discarding a PDCP SDU already associated with a PDCP SN will result in an SN gap (gap) for the PDCP data PDUs to be transmitted. This will increase the PDCP re-ordering (re-ordering) delay of a receiving PDCP entity. In this case, how the SN gap is minimized after an SDU is discarded will be ensured based on UE implementation.

Existing wireless networks can support XR service transmissions of users. As described above, regarding the XR service requested by a user UE, bidirectional interactive data transmission is performed between the user UE and the network. The application server at the network side generates XR service data such as videos and audios and transmits the data downlink to the UE through the wireless network. The UE side also needs to transmit uplink to the network the XR service data information generated by the UE, such as videos and audios, as well as the foregoing control signaling and special data with control functions, so as to control the generation and transmission of the XR service data on the network side through such control information/special data. The generation and transmission of downlink XR service data on the network side depends on whether uplink control information of the UE side can be sent to the network in a timely and effective manner.

In existing solutions, the discard timers for PDCP SDUs are independent of each other and have no relationship with each other. In some services such as the XR or CG service, data packets corresponding to a service in the same frame are closely correlated, and the services in different frames, for example, between I frames or IDR frames and P frames, are also correlated to some extent. Therefore, discarding of these correlated data packets is also interdependent. For example, when one data packet is discarded, other correlated data packets do not need to be transmitted and can be discarded. At this point, the existing independent data packet discarding design may cause some ineffective data transmissions, leading to waste of system resources or increased delay of some data.

An embodiment of this application provides a data transmission method executed by a terminal. As shown in FIG. 2, the method includes the following step.

Step 101. In a case that a terminal discards a first data unit, the terminal discards at least some of data units associated with the first data unit, where the first data unit includes a first data packet and/or a first group, and the data unit includes a data packet and/or a group.

In the embodiment of this application, at least some of the data units associated with the first data unit are discarded in a case that the terminal discards the first data unit. When a data unit is discarded, data units associated with the data unit cannot be successfully transmitted or demodulated and therefore can be discarded in advance. This can reduce ineffective data transmissions, save system resources, and increase system resource utilization, while ensuring the transmission efficiency of other data packets and reducing the transmission delay of data packets.

For example, in the XR or CG service, data packets corresponding to a service in the same frame are closely correlated, and the services in different frames, such as between I frames or IDR frames and P frames, are also correlated to some extent. Therefore, discarding of these correlated data packets is also interdependent. For example, when one data packet is discarded, other correlated data packets do not need to be transmitted and can be discarded. This can reduce ineffective data transmissions, save system resources, and increase system resource utilization.

In some embodiments, in a case that a first timer corresponding to the first data unit expires, the terminal discards the first data unit. If the first timer expires, the first data unit may have not been successfully transmitted. In this case, the terminal may discard the first data unit. The first timer may be a discard timer. The discard timer is used to control the discarding of a data packet or a group. Specifically, when the discard timer corresponding to a data packet or a group expires, the data packet or group is discarded.

In some embodiments, a timer corresponding to the data unit associated with the first data unit has not expired, but the data unit associated with the first data unit is still discarded. This is because the first data unit has been discarded and the data unit associated with the first data unit cannot be successfully transmitted or demodulated. To save system resources, it is unnecessary to transmit the data unit associated with the first data unit.

In some embodiments, the discarding, by the terminal, at least some of data units associated with the first data unit includes:
discarding, by the terminal based on first indication information, at least some of the data units associated with the first data unit, where the first indication information is used to indicate the terminal to discard at least some of the data units associated with the first data unit in a case of discarding the first data unit.

In this way, the first indication information can be used to flexibly indicate the terminal to discard at least some of the data units associated with the first data unit. When system resources need to be saved, the first indication information is used to indicate the terminal to discard at least some of the data units associated with the first data unit in a case of discarding the first data unit.

In some embodiments, the first indication information is configured (or defined) by a network-side device and/or indicated (or defined) by a first protocol layer, where the first protocol layer includes at least one of the following: an application layer, an IP (internet protocol) layer, an RRC (radio resource control) layer, an SDAP (service data adaptation protocol) layer, a PDCP layer, an RLC layer, a MAC layer, and a PHY physical layer. Herein the first protocol layer may be on the terminal side or network side. For example, a downlink data packet is indicated by the first protocol layer of the network side, while an uplink data packet is indicated by the first protocol layer of the terminal side. The network side includes a base station device, a core network device (for example, an AMF, an AF, or a UPF), a server side, and a data source side.

In a specific example, the first data unit is a first data packet, and in a case of discarding the first data packet, the first indication information is used to indicate at least one of the following:
a group (or a data packet set) to which the first data packet belongs, or some, rest, or all of the data packets in the group need to be discarded simultaneously;
some or all of the data packets associated with the first data packet need to be discarded simultaneously;
a group to which a data packet associated with the first data packet belongs, or some, rest, or all of the data packets in the group need to be discarded simultaneously;
some or all of the groups associated with the group to which the first data packet belongs need to be discarded simultaneously;
some, rest, or all of the data packets in some or all of the groups associated with the group to which the first data packet belongs need to be discarded simultaneously;
some or all of the data packets corresponding to the timer need to be discarded simultaneously;
some or all of the data packets associated with the data packet corresponding to the timer need to be discarded simultaneously;
some or all of the groups corresponding to the timer need to be discarded simultaneously;
some, rest, or all of the data packets in some or all of the groups corresponding to the timer need to be discarded simultaneously;
some or all of the groups associated with some or all of the groups corresponding to the timer need to be discarded simultaneously; and
some, rest, or all of the data packets in some or all of the groups associated with some or all of the groups corresponding to the timer need to be discarded simultaneously.

This can reduce ineffective data transmissions, save system resources, and increase system resource utilization, while ensuring the transmission efficiency of other data packets and reducing the transmission delay of data packets.

In some embodiments, a data packet associated with the first data unit includes at least one of the following:
a data packet in the first group, where the first group is a group to which the first data packet belongs;
a second data packet having an implicit association relationship or an explicit association relationship with the first data unit; and
a data packet in a second group, where the second group has an implicit association relationship or an explicit association relationship with the first data unit.

In some embodiments, a data packet associated with the first data unit includes at least one of the following:
a data packet corresponding to the first timer; and
a data packet in a third group, where the third group corresponds to the first timer.

In this embodiment, in a case that the first data unit is discarded, at least some of data packets corresponding to the first timer are discarded because most of the data packets corresponding to the first timer are associated with the first data unit. This can reduce ineffective data transmissions, save system resources, and increase system resource utilization, while ensuring the transmission efficiency of other data packets and reducing the transmission delay of data packets.

In some embodiments, a group associated with the first data unit includes at least one of the following:
a second group, where the second group has an implicit association relationship or an explicit association relationship with the first data unit; and
a group to which a second data packet having an implicit association relationship or an explicit association relationship with the first data unit belongs.

In some embodiments, a group associated with the first data unit includes at least one of the following:
a group to which a data packet corresponding to the first timer belongs; and
a third group corresponding to the first timer.

In this embodiment, in a case that the first data unit is discarded, at least some of the data packets in the group corresponding to the first timer are discarded because most of the groups corresponding to the first timer are associated with the first data unit. This can reduce ineffective data transmissions, save system resources, and increase system resource utilization, while ensuring the transmission efficiency of other data packets and reducing the transmission delay of data packets.

For example, the first data unit is a first data packet. If a timer associated with the first data packet expires (that is, the first data packet is not successfully transmitted within the time specified by the timer), at least one of the following is performed:
discarding the first data packet;
discarding a group (or a data packet set) to which the first data packet belongs, or some, rest, or all of the data packets in the group;
discarding some or all of the data packets associated with the first data packet;
discarding a group to which a data packet associated with the first data packet belongs, or some, rest, or all of the data packets in the group;
discarding some or all of the groups associated with the group to which the first data packet belongs;
discarding some, rest, or all of the data packets in some or all of the groups associated with the group to which the first data packet belongs;
discarding some or all of the data packets corresponding to the timer;
discarding some or all of the data packets associated with the data packet corresponding to the timer;
discarding some or all of the groups corresponding to the timer;
discarding some, rest, or all of the data packets in some or all of the groups corresponding to the timer;
discarding some or all of the groups associated with some or all of the groups corresponding to the timer; and
discarding some, rest, or all of the data packets in some or all of the groups associated with some or all of the groups corresponding to the timer.

This can reduce ineffective data transmissions, save system resources, and increase system resource utilization, while ensuring the transmission efficiency of other data packets and reducing the transmission delay of data packets.

In some embodiments, the explicit association relationship is configured (or defined) by a network-side device and/or indicated (or defined) by a first protocol layer, where the first protocol layer includes at least one of the following: an application layer, an IP layer, an RRC layer, an SDAP layer, a PDCP layer, an RLC layer, a MAC layer, and a PHY physical layer. Herein the first protocol layer may be on the terminal side or network side. For example, a downlink data packet is indicated by the first protocol layer of the network side, while an uplink data packet is indicated by the first protocol layer of the terminal side. The network side includes a base station device, a core network device (for example, an AMF, an AF, or a UPF), a server side, and a data source side.

In some embodiments, the implicit association relationship corresponding to the second data packet includes at least one of the following:
the second data packet is in the first group;
the second group is associated with the first data packet;
the second data packet is in the second group;
the second packet corresponds to the first timer;
the second data packet and the first group correspond to a same timer;
the second data packet is in a fourth group, where the fourth group corresponds to the first timer; and
the second data packet is in a fifth group, where the fifth group and the first group correspond to a same timer.

For example, the second data packet has an implicit association relationship with the first data packet, and the second data packet includes at least one of the following:
some or all other data packets in a same group (or a data packet set) as the first data packet;
some, rest or all of data packets in other groups associated with the first data packet;
some, rest or all of data packets in other groups associated with the group to which the first data packet belongs or the first group;
second data packets associated with a same timer as the first data packet, the group to which the first data packet belongs, or the first group, including other data packets in the same group or different groups; and
some, rest or all of the data packets in the second group associated with a same timer as the first data packet, the group to which the first data packet belongs, or the first group, including other packets in the same group or different groups.

In some embodiments, the implicit association relationship corresponding to the second group includes at least one of the following:
the first data packet is in the second group;
the second group is associated with the first group;
the second group corresponds to the first timer;
the second group and the first group correspond to a same timer; and
the second data packet is in the second group.

For example, the second group has an implicit association relationship with the first data packet, and the second group includes at least one of the following:
a group (or a data packet set) to which the first data packet belongs;
other groups associated with the group to which the first data packet belongs;
a second group associated with a same timer as the first data packet and/or the first group;
a second group associated with a same timer as the group to which the first data packet belongs;
a group to which the second data packet associated with the first data packet and/or the first group belongs; and
a group to which the second data packet belongs, where the second data packet is associated with the group to which the first data packet belongs.

In some embodiments, a first operation on one of the first data unit and the data unit associated with the first data unit depends on the other, where the first operation includes at least one of the following: transmission, decoding, demodulation, reception, displaying, and integrity check. The one of the foregoing data units may be the first data packet, a data packet in the first group, the first group, or a group to which the first data packet belongs, and the other one may be the second packet, a data packet in the second group, the second group, or a group to which the second data packet belongs.

In some embodiments, the first timer includes any one of the following:
a timer configured for the terminal;
a timer configured for a protocol layer to which the first data unit belongs; where the protocol layer includes at least one of the following: an IP layer, an SDAP layer, a PDCP layer, an RLC layer, a MAC layer, and a PHY layer;
a timer configured or defined for the first data packet;
a timer configured or defined for the first group;
a timer configured or defined for the second data packet;
a timer configured or defined for the second group;
a timer configured or defined for the 1^{st} data packet in the first group;
a timer configured or defined for the last data packet in the first group;
a timer corresponding to a data packet first configured with a timer in the first group;
a timer corresponding to a data packet last configured with a timer in the first group;
the 1^{st} valid timer corresponding to all data packets in a same group, where the group includes a first group, a second group, a third group, a fourth group, or a fifth group; and
the last expired timer corresponding to all data packets in a same group, where the group includes a first group, a second group, a third group, a fourth group, or a fifth group.

In some embodiments, the first data packet or the data packet includes at least one of the following:
a PDCP SDU;
a PDCP PDU;
an RLC SDU;
an RLC PDU;
a MAC SDU;
a MAC PDU;
a physical layer data packet, for example, a transmission block;
an RRC layer data packet, for example, an RRC message;
an SDAP layer PDU;
an SDAP layer SDU;
an IP data packet package;
a data packet corresponding to a PDU session;
a data packet corresponding to a QoS flow; and
a data packet corresponding to a radio bearer Radio Bearer.

In some embodiments, the first group or the group is at least one of the following:
a combination or a set of multiple data packets;
a data packet or a data packet set of an upper layer, where the upper layer includes at least one of the following: an application layer, an IP layer, an RRC layer, an SDAP layer, a PDCP layer, an RLC layer, and a MAC layer, and the upper layer is an upper layer of a protocol layer to which the current data packet or group belongs;
data packets or data packet sets corresponding to a QoS flow;
I frames, IDR frames, or I slices in a service;
P frames or P slices in a service;
B frames or B slices in a service;
Fov frames in a service;
non-Fov frames in a service;
voice data packets or data packet sets in a service;
video or image data packets or data packet sets in a service;
data packets or data packet sets of different priorities in a service;
data packets or data packet sets corresponding to a base layer in a service; and
data packets or data packet sets corresponding to an enhancement layer in a service.

In the XR service, a layered model (layered model) is usually used to divide service data into different layers based on different characteristics, where different layers correspond to different requirements such as QoS requirements and levels of importance, for example:
I frames, IDR frames, P frames, or B frames in the XR or CG service;
I slices, P slices, or B slices in the XR or CG service;
Fov or non-Fov frames in the XR or CG service;
voice data packets or video image data packets in the XR or CG service;
data packets of different priorities defined in the XR or CG service; and
data packets corresponding to the base layer or enhancement layer in the XR or CG service.

An association or dependency relationship may exist between these data packets belonging to the same layer or different layers. Therefore, the technical solution in this embodiment can be applied to the XR or CG service. When one data unit of the XR or CG service is discarded, other data units having an association or dependency relationship with the data unit are discarded. The different groups mentioned above include different groups of the same type or different groups of different types.

In a specific example, a discard timer may be configured for each PDCP packet. The PDCP packet includes at least one of the following types.
1. Data packets belonging to an I frame or IDR frame. In this case, the data packets of the I frame or IDR frame correspond to one of the foregoing groups, and can be divided into multiple PDCP data packets.
2. Data packets belonging to a P frame. In this case, the data packets of the P frame correspond to one of the foregoing groups, and can be divided into multiple PDCP data packets.

If a timer associated with a PDCP data packet expires, the corresponding data packet is discarded. For example, if a timer corresponding to a first PDCP packet belonging to the I frame or IDR frame data packets expires, the first PDCP packet is discarded, and a second PDCP packet is also discarded, where the second PDCP packet includes at least one of the following:
some or all of the PDCP packets belonging to the I frame or IDR frame data packets in the group (namely, corresponding I frame or IDR frame data packets) to which the PDCP packet belongs;
some or all of the PDCP packets belonging to second I frame or IDR frame data packets, where the transmission, encoding, decoding, reception, or display of the second I frame or IDR frame data packets is dependent on the first PDCP packet or the group to which the first PDCP packet belongs; and
some or all of the PDCP packets belonging to first P frame data packets, where the transmission, encoding, decoding, reception, or display of the first P frame data packets is dependent on the first PDCP packet or the group to which the first PDCP packet belongs.

If a timer corresponding to a first PDCP packet belonging to P frame data packets expires, the first PDCP packet is discarded, and a second PDCP packet is also discarded, where the second PDCP packet includes at least one of the following:
some or all of the PDCP packets belonging to the P frame data packets in the group (namely, corresponding P frame data packets) to which the PDCP packet belongs; and
some or all of the PDCP packets belonging to second P frame data packets, where the transmission, encoding, decoding, reception, or display of the second P frame data packets is dependent on the first PDCP packet or the group to which the first PDCP packet belongs.

Certainly, different layering manners for the XR or CG service correspond to different group types. The foregoing group may alternatively be at least one of the following:

Fov or non-Fov frames in the XR or CG service;
voice data packets or video image data packets in the XR or CG service;
data packets of different priorities defined in the XR or CG service; and
data packets corresponding to the base layer or enhancement layer in the XR or CG service.

It should be noted that the data transmission method in this embodiment of this application may be performed by the data transmission apparatus or a module for performing or loading the data transmission method in the data transmission apparatus. In the embodiments of this application, the data transmission method provided in the embodiments of this application is described by using the data transmission method being executed by a data transmission apparatus as an example.

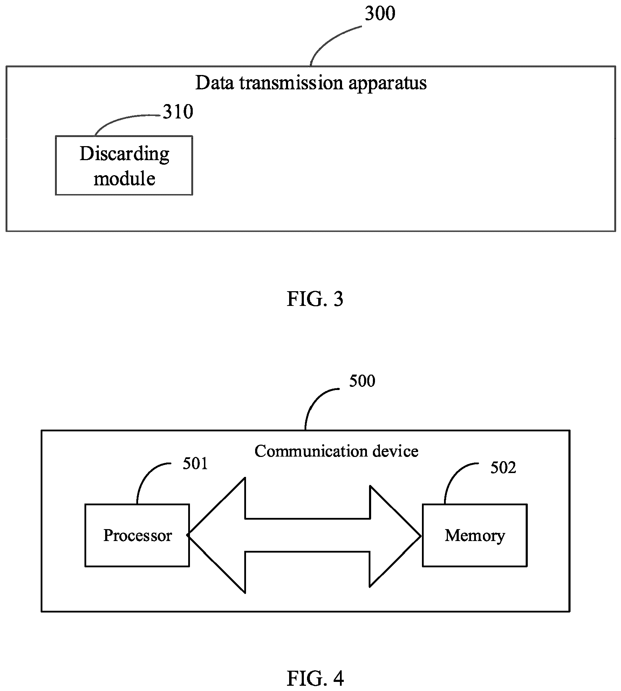

An embodiment of this application provides a data transmission apparatus 300 applied to a terminal. As shown in FIG. 3, the apparatus includes:
a discarding module 310 configured to: in a case that a terminal discards a first data unit, discard at least some of data units associated with the first data unit, where the first data unit includes a first data packet and/or a first group, and the data unit includes a data packet and/or a group.

In some embodiments, the discarding module 310 is specifically configured to discard the first data unit in a case that a first timer corresponding to the first data unit expires.

In some embodiments, the discarding module 310 is specifically configured to discard, based on first indication information, at least some of the data units associated with the first data unit, where the first indication information is used to indicate the terminal to discard at least some of the data units associated with the first data unit in a case of discarding the first data unit.

In some embodiments, a timer corresponding to the data unit associated with the first data unit has not expired.

In some embodiments, a data packet associated with the first data unit includes at least one of the following:
a data packet in the first group, where the first group is a group to which the first data packet belongs;
a second data packet having an implicit association relationship or an explicit association relationship with the first data unit; and
a data packet in a second group, where the second group has an implicit association relationship or an explicit association relationship with the first data unit.

In some embodiments, a data packet associated with the first data unit includes at least one of the following:
a data packet corresponding to the first timer; and
a data packet in a third group, where the third group corresponds to the first timer.

In some embodiments, a group associated with the first data unit includes at least one of the following:
a second group, where the second group has an implicit association relationship or an explicit association relationship with the first data unit; and
a group to which a second data packet having an implicit association relationship or an explicit association relationship with the first data unit belongs.

In some embodiments, a group associated with the first data unit includes at least one of the following:
a group to which a data packet corresponding to the first timer belongs; and a third group corresponding to the first timer.

In some embodiments, the explicit association relationship is configured by a network-side device and/or indicated by a first protocol layer, where the first protocol layer includes at least one of the following: an application layer, an IP layer, an RRC layer, an SDAP layer, a PDCP layer, an RLC layer, a MAC layer, and a PHY physical layer.

In some embodiments, the implicit association relationship corresponding to the second data packet includes at least one of the following:
the second data packet is in the first group;
the second group is associated with the first data packet;
the second data packet is in the second group;
the second packet corresponds to the first timer;
the second data packet and the first group correspond to a same timer;
the second data packet is in a fourth group, where the fourth group corresponds to the first timer; and
the second data packet is in a fifth group, where the fifth group and the first group correspond to a same timer.

In some embodiments, the implicit association relationship corresponding to the second group includes at least one of the following:
the first data packet is in the second group;
the second group is associated with the first group;
the second group corresponds to the first timer;
the second group and the first group correspond to a same timer; and
the second data packet is in the second group.

In some embodiments, a first operation on one of the first data unit and the data unit associated with the first data unit depends on the other, where the first operation includes at least one of the following: transmission, decoding, demodulation, reception, displaying, and integrity check.

In some embodiments, the first indication information is configured by a network-side device and/or indicated by a first protocol layer, where the first protocol layer includes at least one of the following: an application layer, an IP layer, an RRC layer, an SDAP layer, a PDCP layer, an RLC layer, a MAC layer, and a PHY physical layer.

In some embodiments, the first timer is a discard timer.

In some embodiments, the first timer includes any one of the following:
a timer configured for the terminal;
a timer configured for a protocol layer to which the first data unit belongs;
a timer configured or defined for the first data packet;
a timer configured or defined for the first group;
a timer configured or defined for the second data packet;
a timer configured or defined for the second group;
a timer configured or defined for the 1^{st} data packet in the first group;
a timer configured or defined for the last data packet in the first group;
a timer corresponding to a data packet first configured with a timer in the first group;
a timer corresponding to a data packet last configured with a timer in the first group;
the 1^{st} valid timer corresponding to all data packets in a same group, where the group includes a first group, a second group, a third group, a fourth group, or a fifth group; and
the last expired timer corresponding to all data packets in a same group, where the group includes a first group, a second group, a third group, a fourth group, or a fifth group.

In some embodiments, the first data packet or the data packet includes at least one of the following:
a PDCP SDU;
a PDCP PDU;
an RLC SDU;
an RLC PDU;
a MAC SDU;
a MAC PDU;
a physical layer data packet;
an RRC layer data packet;
an SDAP layer PDU;
an SDAP layer SDU;
an IP data packet package;
a data packet corresponding to a PDU session;
a data packet corresponding to a QoS flow; and
a data packet corresponding to a radio bearer Radio Bearer.

In some embodiments, the first group or the group is at least one of the following:
a combination or a set of multiple data packets;
data packets or data packet sets of an upper layer, where the upper layer includes at least one of the following: an application layer, an IP layer, an RRC layer, an SDAP layer, a PDCP layer, an RLC layer, and a MAC layer;
data packets or data packet sets corresponding to a QoS flow;
I frames, IDR frames, or I slices in a service;
P frames or P slices in a service;
B frames or B slices in a service;
Fov frames in a service;
non-Fov frames in a service;
voice data packets or data packet sets in a service;
video or image data packets or data packet sets in a service;
data packets or data packet sets of different priorities in a service;
data packets or data packet sets corresponding to a base layer in a service; and
data packets or data packet sets corresponding to an enhancement layer in a service.

The data transmission apparatus in the embodiment of this application may be an apparatus, or an apparatus or electronic device with an operating system, or may be a component, an integrated circuit, or a chip of a terminal. The apparatus or electronic device may be a mobile terminal or a non-mobile terminal. For example, the mobile terminal may include but is not limited to a type of the foregoing terminal 11, and the non-mobile terminal may be a server, a network attached storage (Network Attached Storage, NAS), a personal computer (personal computer, PC), a television (television, TV), a teller machine, a self-service machine, or the like. This is not specifically limited in the embodiments of this application.

The data transmission apparatus provided in this embodiment of this application can implement the processes of the method embodiment illustrated in FIG. 2, with the same technical effects achieved. To avoid repetition, details are not described herein again.

Optionally, as shown in FIG. 4, an embodiment of this application further provides a communication device 500 including a processor 501, a memory 502, and a program or instructions stored in the memory 502 and capable of running on the processor 501. For example, in a case that the communication device 500 is a terminal and the program or instructions are executed by the processor 501, the processes of the foregoing embodiments of the data transmission method applied to the terminal are implemented, with the same technical effects achieved.

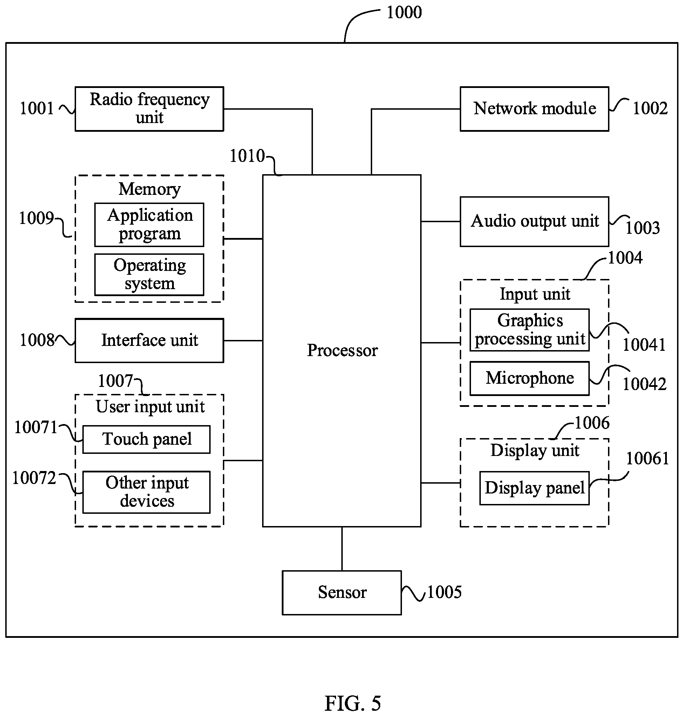

An embodiment of this application further provides a terminal including a processor and a communication interface. The processor is configured to: in a case that the terminal discards a first data unit, discard at least some of data units associated with the first data unit, where the first data unit includes a first data packet and/or a first group, and the data unit includes a data packet and/or a group. The terminal embodiment corresponds to the foregoing method embodiments used on the terminal side. All the processes and implementations of the foregoing method embodiments can be applied to the terminal embodiment, with the same technical effects achieved. Specifically, FIG. 5 is a schematic diagram of a hardware structure of a terminal implementing the embodiments of this application.

The terminal 1000 includes but is not limited to at least some components of a radio frequency unit 1001, a network module 1002, an audio output unit 1003, an input unit 1004, a sensor 1005, a display unit 1006, a user input unit 1007, an interface unit 1008, a memory 1009, and a processor 1010.

Persons skilled in the art can understand that the terminal 1000 may further include a power source (for example, a battery) for supplying power to the components. The power source may be logically connected to the processor 1010 through a power management system. In this way, functions such as charge management, discharge management, and power consumption management are implemented by using the power management system. The structure of the terminal shown in FIG. 5 does not constitute a limitation on the terminal. The terminal may include more or fewer components than shown in the figure, or combine some components, or have a different component arrangement. Details are not described again herein.

It should be understood that in the embodiments of this application, the input unit 1004 may include a graphics processing unit (Graphics Processing Unit, GPU) 10041 and a microphone 10042. The graphics processing unit 10041 processes image data of a static picture or a video that is obtained by an image capture apparatus (for example, a camera) in a video capture mode or an image capture mode. The display unit 1006 may include a display panel 10061. The display panel 10061 may be configured in a form of a liquid crystal display, an organic light-emitting diode, or the like. The user input unit 1007 includes a touch panel 10071 and other input devices 10072. The touch panel 10071 is also referred to as a touchscreen. The touch panel 10071 may include two parts: a touch detection apparatus and a touch controller. The other input devices 10072 may include but are not limited to a physical keyboard, a functional button (such as a volume control button or a power on/off button), a trackball, a mouse, and a joystick. Details are not described herein again.

In the embodiments of this application, the radio frequency circuit 1001 receives downlink data from the network-side device for processing by the processor 1010, and sends uplink data to the network-side device. Generally, the radio frequency unit 1001 includes but is not limited to an antenna, at least one amplifier, a transceiver, a coupler, a low noise amplifier, a duplexer, and the like.

The memory 1009 may be configured to store software programs or instructions, and various data. The memory 1009 may mainly include a program or instruction storage area and a data storage area. The program or instruction storage area may store an operating system, an application program or instructions required by at least one function (for example, an audio playing function and an image playing function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one magnetic disk storage device, a flash storage device, or another volatile solid-state storage device.

The processor 1010 may include one or more processing units. Optionally, the processor 1010 may integrate an application processor and a modem processor. The application processor mainly processes an operating system, a user interface, an application program or instructions, and the like. The modem processor mainly processes wireless communication, for example, a baseband processor. It should be understood that alternatively, the modem processor may not be integrated into the processor 1010.

The processor 1010 is configured to: in a case that a terminal discards a first data unit, discard at least some of data units associated with the first data unit, where the first data unit includes a first data packet and/or a first group, and the data unit includes a data packet and/or a group.

In some embodiments, the processor 1010 is specifically configured to discard the first data unit in a case that a first timer corresponding to the first data unit expires.

In some embodiments, the processor 1010 is specifically configured to discard, based on first indication information, at least some of the data units associated with the first data unit, where the first indication information is used to indicate the terminal to discard at least some of the data units associated with the first data unit in a case of discarding the first data unit.

In some embodiments, a timer corresponding to the data unit associated with the first data unit has not expired.

In some embodiments, a data packet associated with the first data unit includes at least one of the following:
a data packet in the first group, where the first group is a group to which the first data packet belongs;
a second data packet having an implicit association relationship or an explicit association relationship with the first data unit; and
a data packet in a second group, where the second group has an implicit association relationship or an explicit association relationship with the first data unit.

In some embodiments, a data packet associated with the first data unit includes at least one of the following:
a data packet corresponding to the first timer; and
a data packet in a third group, where the third group corresponds to the first timer.

In some embodiments, a group associated with the first data unit includes at least one of the following:
a second group, where the second group has an implicit association relationship or an explicit association relationship with the first data unit; and
a group to which a second data packet having an implicit association relationship or an explicit association relationship with the first data unit belongs.

In some embodiments, a group associated with the first data unit includes at least one of the following:
a group to which a data packet corresponding to the first timer belongs; and a third group corresponding to the first timer.

In some embodiments, the explicit association relationship is configured by a network-side device and/or indicated by a first protocol layer, where the first protocol layer includes at least one of the following: an application layer, an IP layer, an RRC layer, an SDAP layer, a PDCP layer, an RLC layer, a MAC layer, and a PHY physical layer.

In some embodiments, the implicit association relationship corresponding to the second data packet includes at least one of the following:
the second data packet is in the first group;
the second group is associated with the first data packet;
the second data packet is in the second group;
the second packet corresponds to the first timer;
the second data packet and the first group correspond to a same timer;
the second data packet is in a fourth group, where the fourth group corresponds to the first timer; and
the second data packet is in a fifth group, where the fifth group and the first group correspond to a same timer.

In some embodiments, the implicit association relationship corresponding to the second group includes at least one of the following:
the first data packet is in the second group;
the second group is associated with the first group;
the second group corresponds to the first timer;
the second group and the first group correspond to a same timer; and
the second data packet is in the second group.

In some embodiments, a first operation on one of the first data unit and the data unit associated with the first data unit depends on the other, where the first operation includes at least one of the following: transmission, decoding, demodulation, reception, displaying, and integrity check.

In some embodiments, the first indication information is configured by a network-side device and/or indicated by a first protocol layer, where the first protocol layer includes at least one of the following: an application layer, an IP layer, an RRC layer, an SDAP layer, a PDCP layer, an RLC layer, a MAC layer, and a PHY physical layer.

In some embodiments, the first timer is a discard timer.

In some embodiments, the first timer includes any one of the following:
a timer configured for the terminal;
a timer configured for a protocol layer to which the first data unit belongs;
a timer configured or defined for the first data packet;
a timer configured or defined for the first group;
a timer configured or defined for the second data packet;
a timer configured or defined for the second group;
a timer configured or defined for the 1^{st} data packet in the first group;
a timer configured or defined for the last data packet in the first group;
a timer corresponding to a data packet first configured with a timer in the first group;
a timer corresponding to a data packet last configured with a timer in the first group;
the 1^{st} valid timer corresponding to all data packets in a same group, where the group includes a first group, a second group, a third group, a fourth group, or a fifth group; and
the last expired timer corresponding to all data packets in a same group, where the group includes a first group, a second group, a third group, a fourth group, or a fifth group.

In some embodiments, the first data packet or the data packet includes at least one of the following:
a PDCP SDU;
a PDCP PDU;
an RLC SDU;
an RLC PDU;
a MAC SDU;
a MAC PDU;
a physical layer data packet;
an RRC layer data packet;
an SDAP layer PDU;
an SDAP layer SDU;
an IP data packet package;
a data packet corresponding to a PDU session;
a data packet corresponding to a QoS flow; and
a data packet corresponding to a radio bearer Radio Bearer.

In some embodiments, the first group or the group is at least one of the following:
a combination or a set of multiple data packets;
data packets or data packet sets of an upper layer, where the upper layer includes at least one of the following: an application layer, an IP layer, an RRC layer, an SDAP layer, a PDCP layer, an RLC layer, and a MAC layer;
data packets or data packet sets corresponding to a QoS flow;
I frames, IDR frames, or I slices in a service;
P frames or P slices in a service;
B frames or B slices in a service;
Fov frames in a service;
non-Fov frames in a service;
voice data packets or data packet sets in a service;
video or image data packets or data packet sets in a service;
data packets or data packet sets of different priorities in a service;
data packets or data packet sets corresponding to a base layer in a service; and
data packets or data packet sets corresponding to an enhancement layer in a service.

An embodiment of this application further provides a readable storage medium, where the readable storage medium may be volatile or non-volatile. The readable storage medium stores a program or instructions, and when the program or instructions are executed by a processor, the processes of the foregoing data transmission method embodiments are implemented, with the same technical effects achieved. To avoid repetition, details are not described herein again.

The processor is the processor in the terminal in the foregoing embodiments. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or an instruction to implement the processes of the foregoing data transmission method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a non-volatile storage medium. The computer program/program product is executed by at least one processor to implement the processes of the foregoing data transmission method embodiments, with the same technical effects achieved. To avoid repetition, details are not described herein again.

It should be noted that in this specification, the terms "include" and "comprise", or any of their variants are intended to cover a non-exclusive inclusion, such that a process, method, article, or apparatus that includes a list of elements not only includes those elements but also includes other elements that are not expressly listed, or further includes elements inherent to such process, method, article, or apparatus. In absence of more constraints, an element preceded by "includes a..." does not preclude the existence of other identical elements in the process, method, article, or apparatus that includes the element. Furthermore, it should be noted that the scope of the methods and apparatuses in the embodiments of this application is not limited to performing the functions in the order shown or discussed, but may also include performing the functions in a substantially simultaneous manner or in a reverse order depending on the functions involved. For example, the described methods may be performed in an order different from that described, and various steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may also be implemented by hardware. However, in many cases, the former is a preferred implementation. Based on such an understanding, the technical solutions of this application essentially or the part contributing to the prior art may be implemented in a form of a computer software product. The software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

## Claims

1. A data transmission method, comprising:
in a case that a terminal discards a first data unit, discarding, by the terminal, at least some of data units associated with the first data unit, wherein the first data unit comprises a first data packet and/or a first group, and the data unit comprises a data packet and/or a group.

2. The data transmission method according to claim 1, wherein in a case that a first timer corresponding to the first data unit expires, the terminal discards the first data unit.

3. The data transmission method according to claim 1, wherein the discarding, by the terminal, at least some of data units associated with the first data unit comprises:
discarding, by the terminal based on first indication information, at least some of the data units associated with the first data unit, wherein the first indication information is used to indicate the terminal to discard at least some of the data units associated with the first data unit in a case of discarding the first data unit.

4. The data transmission method according to claim 1, wherein a timer corresponding to the data unit associated with the first data unit has not expired.

5. The data transmission method according to claim 1, wherein a data packet associated with the first data unit comprises at least one of the following:
a data packet in the first group, wherein the first group is a group to which the first data packet belongs;
a second data packet having an implicit association relationship or an explicit association relationship with the first data unit; and
a data packet in a second group, wherein the second group has an implicit association relationship or an explicit association relationship with the first data unit.

6. The data transmission method according to claim 2, wherein a data packet associated with the first data unit comprises at least one of the following:
a data packet corresponding to the first timer; and
a data packet in a third group, wherein the third group corresponds to the first timer.

7. The data transmission method according to claim 1, wherein a group associated with the first data unit comprises at least one of the following:
a second group, wherein the second group has an implicit association relationship or an explicit association relationship with the first data unit; and
a group to which a second data packet having an implicit association relationship or an explicit association relationship with the first data unit belongs.

8. The data transmission method according to claim 2, wherein a group associated with the first data unit comprises at least one of the following:
a group to which a data packet corresponding to the first timer belongs; and a third group corresponding to the first timer.

9. The data transmission method according to claim 5 or 7, wherein the explicit association relationship is configured by a network-side device and/or indicated by a first protocol layer, wherein the first protocol layer comprises at least one of the following: an application layer, an IP layer, an RRC layer, an SDAP layer, a PDCP layer, an RLC layer, a MAC layer, and a PHY physical layer.

10. The data transmission method according to claim 5 or 7, wherein the implicit association relationship corresponding to the second data packet comprises at least one of the following:
the second data packet is in the first group;
the second group is associated with the first data packet;
the second data packet is in the second group;
the second data packet corresponds to a first timer, wherein the first timer corresponds to the first data unit;
the second data packet and the first group correspond to a same timer;
the second data packet is in a fourth group, wherein the fourth group corresponds to the first timer; and
the second data packet is in a fifth group, wherein the fifth group and the first group correspond to a same timer.

11. The data transmission method according to claim 5 or 7, wherein the implicit association relationship corresponding to the second group comprises at least one of the following:
the first data packet is in the second group;
the second group is associated with the first group;
the second group corresponds to a first timer, wherein the first timer corresponds to the first data unit;
the second group and the first group correspond to a same timer; and
the second data packet is in the second group.

12. The data transmission method according to any one of claims 1 to 8, wherein a first operation on one of the first data unit and the data unit associated with the first data unit depends on the other, wherein the first operation comprises at least one of the following: transmission, decoding, demodulation, reception, displaying, and integrity check.

13. The data transmission method according to claim 3, wherein the first indication information is configured by a network-side device and/or indicated by a first protocol layer, wherein the first protocol layer comprises at least one of the following: an application layer, an IP layer, an RRC layer, an SDAP layer, a PDCP layer, an RLC layer, a MAC layer, and a PHY physical layer.

14. The data transmission method according to claim 2, wherein the first timer is a discard timer.

15. The data transmission method according to claim 6 or 8, wherein the first timer comprises any one of the following:
a timer configured for the terminal;
a timer configured for a protocol layer to which the first data unit belongs;
a timer configured or defined for the first data packet;
a timer configured or defined for the first group;
a timer configured or defined for a second data packet, wherein the second data packet is associated with the first data unit;
a timer configured or defined for a second group, wherein the second group is associated with the first data unit;
a timer configured or defined for the 1^{st} data packet in the first group;
a timer configured or defined for the last data packet in the first group;
a timer corresponding to a data packet first configured with a timer in the first group;
a timer corresponding to a data packet last configured with a timer in the first group;
the 1^{st} valid timer corresponding to all data packets in a same group, wherein the group comprises a first group, a second group, a third group, a fourth group, or a fifth group; and
the last expired timer corresponding to all data packets in a same group, wherein the group comprises a first group, a second group, a third group, a fourth group, or a fifth group.

16. The data transmission method according to claim 1, wherein the first data packet or the data packet comprises at least one of the following:
a PDCP SDU;
a PDCP PDU;
an RLC SDU;
an RLC PDU;
a MAC SDU;
a MAC PDU;
a physical layer data packet;
an RRC layer data packet;
an SDAP layer PDU;
an SDAP layer SDU;
an IP data packet;
a data packet corresponding to a PDU session;
a data packet corresponding to a QoS flow; and
a data packet corresponding to a radio bearer Radio Bearer.

17. The data transmission method according to claim 1, wherein the first group or the group is at least one of the following:
a combination or a set of multiple data packets;
data packets or data packet sets of an upper layer, wherein the upper layer comprises at least one of the following: an application layer, an IP layer, an RRC layer, an SDAP layer, a PDCP layer, an RLC layer, and a MAC layer;
data packets or data packet sets corresponding to a QoS flow;
I frames, IDR frames, or I slices in a service;
P frames or P slices in a service;
B frames or B slices in a service;
Fov frames in a service;
non-Fov frames in a service;
voice data packets or data packet sets in a service;
video or image data packets or data packet sets in a service;
data packets or data packet sets of different priorities in a service;
data packets or data packet sets corresponding to a base layer in a service; and
data packets or data packet sets corresponding to an enhancement layer in a service.

18. A data transmission apparatus, comprising:
a discarding module configured to: in a case that a terminal discards a first data unit, discard at least some of data units associated with the first data unit, wherein the first data unit comprises a first data packet and/or a first group, and the data unit comprises a data packet and/or a group.

19. The data transmission apparatus according to claim 18, wherein
the discarding module is specifically configured to discard the first data unit in a case that a first timer corresponding to the first data unit expires.

20. The data transmission apparatus according to claim 18, wherein the discarding module is specifically configured to discard, based on first indication information, at least some of the data units associated with the first data unit, wherein the first indication information is used to indicate the terminal to discard at least some of the data unit associated with the first data unit in a case of discarding the first data unit.

21. The data transmission apparatus according to claim 18, wherein a timer corresponding to the data unit associated with the first data unit has not expired.

22. The data transmission apparatus according to claim 18, wherein a data packet associated with the first data unit comprises at least one of the following:
a data packet in the first group, wherein the first group is a group to which the first data packet belongs;
a second data packet having an implicit association relationship or an explicit association relationship with the first data unit; and
a data packet in a second group, wherein the second group has an implicit association relationship or an explicit association relationship with the first data unit.

23. The data transmission apparatus according to claim 19, wherein a data packet associated with the first data unit comprises at least one of the following:
a data packet corresponding to the first timer; and
a data packet in a third group, wherein the third group corresponds to the first timer.

24. The data transmission apparatus according to claim 18, wherein a group associated with the first data unit comprises at least one of the following:
a second group, wherein the second group has an implicit association relationship or an explicit association relationship with the first data unit; and
a group to which a second data packet having an implicit association relationship or an explicit association relationship with the first data unit belongs.

25. The data transmission apparatus according to claim 19, wherein a group associated with the first data unit comprises at least one of the following:
a group to which a data packet corresponding to the first timer belongs; and a third group corresponding to the first timer.

26. The data transmission apparatus according to claim 22 or 24, wherein the explicit association relationship is configured by a network-side device and/or indicated by a first protocol layer, wherein the first protocol layer comprises at least one of the following: an application layer, an IP layer, an RRC layer, an SDAP layer, a PDCP layer, an RLC layer, a MAC layer, and a PHY physical layer.

27. The data transmission apparatus according to claim 22 or 24, wherein the implicit association relationship corresponding to the second data packet comprises at least one of the following:
the second data packet is in the first group;
the second group is associated with the first data packet;
the second data packet is in the second group;
the second data packet corresponds to a first timer, wherein the first timer corresponds to the first data unit;
the second data packet and the first group correspond to a same timer;
the second data packet is in a fourth group, wherein the fourth group corresponds to the first timer; and
the second data packet is in a fifth group, wherein the fifth group and the first group correspond to a same timer.

28. The data transmission apparatus according to claim 22 or 24, wherein the implicit association relationship corresponding to the second group comprises at least one of the following:
the first data packet is in the second group;
the second group is associated with the first group;
the second group corresponds to a first timer, wherein the first timer corresponds to the first data unit;
the second group and the first group correspond to a same timer; and
the second data packet is in the second group.

29. The data transmission apparatus according to any one of claims 18 to 25, wherein a first operation on one of the first data unit and the data unit associated with the first data unit depends on the other, wherein the first operation comprises at least one of the following: transmission, decoding, demodulation, reception, displaying, and integrity check.

30. The data transmission apparatus according to claim 20, wherein the first indication information is configured by a network-side device and/or indicated by a first protocol layer, wherein the first protocol layer comprises at least one of the following: an application layer, an IP layer, an RRC layer, an SDAP layer, a PDCP layer, an RLC layer, a MAC layer, and a PHY physical layer.

31. The data transmission apparatus according to claim 19, wherein the first timer is a discard timer.

32. The data transmission apparatus according to claim 23 or 25, wherein the first timer comprises any one of the following:
a timer configured for the terminal;
a timer configured for a protocol layer to which the first data unit belongs;
a timer configured or defined for the first data packet;
a timer configured or defined for the first group;
a timer configured or defined for a second data packet, wherein the second data packet is associated with the first data unit;
a timer configured or defined for a second group, wherein the second group is associated with the first data unit;
a timer configured or defined for the 1^{st} data packet in the first group;
a timer configured or defined for the last data packet in the first group;
a timer corresponding to a data packet first configured with a timer in the first group;
a timer corresponding to a data packet last configured with a timer in the first group;
the 1^{st} valid timer corresponding to all data packets in a same group, wherein the group comprises a first group, a second group, a third group, a fourth group, or a fifth group; and
the last expired timer corresponding to all data packets in a same group, wherein the group comprises a first group, a second group, a third group, a fourth group, or a fifth group.

33. The data transmission apparatus according to claim 18, wherein the first data packet or the data packet comprises at least one of the following:
a PDCP SDU;
a PDCP PDU;
an RLC SDU;
an RLC PDU;
a MAC SDU;
a MAC PDU;
a physical layer data packet;
an RRC layer data packet;
an SDAP layer PDU;
an SDAP layer SDU;
an IP data packet package;
a data packet corresponding to a PDU session;
a data packet corresponding to a QoS flow; and
a data packet corresponding to a radio bearer Radio Bearer.

34. The data transmission apparatus according to claim 18, wherein the first group or the group is at least one of the following:
a combination or a set of multiple data packets;
data packets or data packet sets of an upper layer, wherein the upper layer comprises at least one of the following: an application layer, an IP layer, an RRC layer, an SDAP layer, a PDCP layer, an RLC layer, and a MAC layer;
data packets or data packet sets corresponding to a QoS flow;
I frames, IDR frames, or I slices in a service;
P frames or P slices in a service;
B frames or B slices in a service;
Fov frames in a service;
non-Fov frames in a service;
voice data packets or data packet sets in a service;
video or image data packets or data packet sets in a service;
data packets or data packet sets of different priorities in a service;
data packets or data packet sets corresponding to a base layer in a service; and
data packets or data packet sets corresponding to an enhancement layer in a service.

35. A terminal, comprising a processor, a memory, and a program or instructions stored in the memory and capable of running on the processor, wherein when the program or instructions are executed by the processor, the steps of the data transmission method according to any one of claims 1 to 17 are implemented.

36. A readable storage medium, wherein the readable storage medium stores a program or instructions, and when the program or instructions are executed by a processor, the data transmission method according to any one of claims 1 to 17 is implemented.
